# EUROPEAN PATENT SPECIFICATION

(11) **EP 2 073 454 B1**
(45) Date of publication and mention of the grant of the patent: **16.02.2011**
(21) Application number: 07291570.5
(22) Date of filing: 19.12.2007
(51) Int. Cl.: H04L 12/46, H04L 12/56

(54) **Updating a dynamic learning table**
Aktualisierung einer dynamischen Lerntafel
Mise à jour d'une table d'apprentissage dynamique

(43) Date of publication of application: 24.06.2009
(73) Proprietor: Alcatel Lucent, 75008 Paris (FR)
(72) Inventor: de Cnodder, Stefaan Jozef, 2275 Lille (BE); Blommaert, Pieter, 2000 Antwerp (BE)
(74) Representative: Narmon, Gisèle Marie Thérèse

(56) References cited:
- EP-A- 1 087 573
- EP-A- 1 185 039
- US-A- 5 210 748

## Description

The present invention relates to a switch with a dynamic Ethernet address-learning table and related method to update a dynamic Ethernet address learning-table.

Such a switch and method are already known in the art, e.g. from the Internet website:
*"http:*//*www.h3c. com*/*porto*/*Technical_Supporf__Documenf*/*Technic al_Documents*/*Routers*/*H3C_MSR_20_Series_Routers*/*Configuration*/*on*/*Operation_ Manual*/*System_Volume(OM_V1.02)*/*200708*/*208880_1285_0.htm".*

At that webpage point 15 - MAC Address Table Management configuration of the book "Operation Manual - GR Overview (System Volume)" is described. Graceful Restart (GR) ensures the continuity of packet forwarding when a routing protocol restarts. Paragraph 1.2.4 of this point 15 describes the configuration of Medium Access Control MAC Address Aging Timer. In that paragraph it is described the MAC address table of e.g. a router can available with an aging mechanism for dynamic entries to prevent its resources from being exhausted.

Indeed, MAC entries in e.g. an Ethernet switch have a certain aging timer. When the MAC address is learned based on source MAC address learning, a timer equal to the aging time is started, and when this timer expires the learned MAC address will be removed from the forwarding table if there was no other packet with that source MAC address. Typical implementations use a different strategy to achieve this behavior, e.g., by means of a hit-bit and global timer such that the MAC entries ages between the aging time and 2 times the aging time. In case the Ethernet switch is a Digital Subscriber Line Access Multiplexer DSLAM , MAC addresses from CPEs or end-devices are learned in the DSLAM, assuming the DSLAM is doing Ethernet switching.

For security reasons, 3 commonly implemented properties of such MAC entries are defined:
(1) Downstream packets with an unknown destination MAC address are dropped, and not flooded to all users like in standard Ethernet switching
(2) While a MAC address is learned, it cannot move to another DSL line to prevent that someone is stealing the MAC address of someone else.
(3)The number of MAC addresses learned on 1 DSL line (or PVC) is limited to a certain maximum. This is to avoid that 1 subscriber consumes a lot of MAC entries in the aggregation switches, or just because of a service sold to the subscriber where the subscriber has to pay for each MAC entry.

Normally, there are 2 types of subscriptions i.e. one MAC address or more MAC addresses.

At Paragraph 1.2.4 of this point 15 of the above mentioned document, it is described that the aging timer has to be put appropriately. A long aging interval may cause the MAC address table to retain outdated entries and fail to accommodate latest network changes. On the other hand, a short interval may result in removal of valid entries and, depending of the used system, hence unnecessary broadcasts which may affect device performance.

Indeed, the problem is how large the aging timer should be set.

A large aging timer is needed to avoid quick aging. When the MAC address is aged, no downstream traffic is possible anymore in the event of the above described implementation (1). Since more and more subscribers want to have their own servers, it is possible that the first packet in e.g. a Transmission Control Protocol TCP session setup is a downstream packet, and hence if the MAC address is aged, the TCP session will not come up. Also for VoIP this is important. It has been seen that the VoIP phones are not generating any periodic messages, resulting in the aging MAC address of the VoIP phone, and hence the subscriber cannot be called.

A large aging timer is also desired for above property (2). Indeed when the aging timer is long, it will be more difficult for an attacker to steal someone's MAC address.

On the other hand, a small aging timer is required for above mentioned property (3). When, a Network Interface Card NIC is replaced, or a CPE is changed, there might not be enough free entries anymore because non-existing devices use the entries.

It is clear that there are reasons to set the aging timer large, and there are reasons to set the aging timer small. Usually a rather small aging timer is used (5-10 minutes) because this is the aging timer used by default by most switches. To avoid aging, it is recommended to set the Dynamic Host Configuration Protocol DHCP lease time smaller than the aging timer such that the DHCP renews refreshes the MAC entry. However, this is in most cases not accepted by providers and they prefer to set the DHCP lease time in the order of hours or even days. There is no good configuration of MAC aging and DHCP lease to cover all situations efficiency as discussed above.

A dynamic learning table is also described in the US patent with Patent Number 5,210,748 with Date of Patent May 11,1993. That patent relates to an address filter method and unit for use in a bridge unit or the like for connecting networks. The address fitter unit carries out an address filter processing between a plurality of networks by using address information extracted from an incoming information frame registered in an entry table. In order to improve the processing efficiency of the address fitter processing, the address filter unit includes timers corresponding to each address information registration, timer updating mpeans for sequentially and intermittently advancing each timer value, and means for deleting registration of the address information corresponding to the timers from the entry table when a timer value becomes equal to or above a predetermined value.

Also in the European Patent Application with reference EP-A-1 087 573 and Date of Publication 28.03.2001, a dynamic learning table is described, In this application, a control system enables: transport of payload data across a: dual counter rotating ring DCRR network having two or more nodes, each node providing access to the DCRR network by a respective local area network subtending the node. This control system comprises a topotogy leaning entity operative within each node for monitoring individual links of the DCRR, discovering the active topology of the DCRR, communicating topology changes to other nodes in the DCRR, and informing frame forwarding and learning process of the topology to enable failover to redundant resource upon detection of a network component failure. A frame forwarding process selects a shortest path route between a source an a destination node in the DCRR, and forwards frames to the destination node via the selected shortest path route. An address learning process inspects a source medium access control MAC address in each received frame to lean a shortest path route for each MAC address.

An object of the present invention is to provide a switch with a dynamic Ethernet address-learning table and rotated method to update a dynamic Ethernet address learning-table of the above known type but that covers above situations more efficiently.

According to the invention, this object is achieved by introducing a predefined minimum aging time value and a predefined maximum aging time value. In this way, a switching device that comprises a dynamic Ethernet address-learning table with for each entry on associated aging timer comprises furthermore :
- a first processor to determine, whether a capacity condition has been reached or has been fulfilled; and
- a second processor to determine, upon reception of a new packet with a new Ethernet address at a port of the switch, a previous Ethernet address: that is associated in the learning table by means of one of the previous entries to this port and for which the associated aging timer already reached a value between such a predefined minimum aging time value and such a predefined maximum aging time value; and
- a third processor to provide an entry to the learning table to overwrite in the learning table the previous Ethernet address with said new Ethernet address. In addition, the capacity condition is accomplished by checking whether a maximum number of Ethernet address entries for the port in the learning table has been reached e.g. checking whether the maximum number of entries for DSL line is already exceeded.

Indeed, as long the minimum aging timer is not expired, the behavior is as with known MAC aging i.e. MAC address does not age, and cannot move to another line. When the minimum timer expired i.e, the associated aging timer of an entry is bigger as the predefined minimum aging time, but not yet the maximum timer, then the MAC will not age i.e. the entry will remain. When a capacity condition is fulfilled, the entry will not remain and the MAC entry will be deleted to favor another new MAC address from the same subscriber- Shortly, this MAC address will not age or will not move to another subscriber. However, when the maximum aging timer is reached i.e. the aging timer of an entry is bigger as the predefined maximum aging time value, the MAC address ages i.e. the entry will be removed from the table.

Another way to implement such a capacity condition is checking whether a maximum number of Ethernet address entries in said learning table have been reached i.e. for the whole learning table. Indeed, the capacity condition might include that each and every DSL line is allowed to have maximum e.g. 10 MAC address entries in the table and, moreover, that all DSL lines together may not exceed more then e.g. 100 MAC address entries in the table.

A recommended value for the minimum aging timer is a time equal than or larger than the aging timer used by the known Ethernet switches in the network that are working with one aging timer.

A recommended value for the maximum aging timer is a time equal than or larger than the DHCP lease time. With these settings, the MAC address will never age since the DHCP renews are refreshing it, which guarantees connectivity and security. Moreover, when a NIC or device is replaced, the MAC will age rather quickly to make room for another MAG of that subscriber.

As an alternative, the maximum aging timer can be replaced by lining up this timer with the DHCP lease time in case a DHCP snooper is used at the device that is doing MAC learning. This alternative is obviously only limited to DHCP routes (and not for PPP; or static IP users), but for DHCP this is also a viable solution to tune the maximum aging timer.

It should be noted that for some reasons the preferred behavior might be slightly different, e.g., when the minimum aging timer is expired but not yet the maximum aging timer, it is better in some cases to allow MAC movement.

It is to be noticed that the term 'comprising', used in the claims, should not be interpreted as being limitative to the means listed thereafter. Thus, the scope of the expression 'a device comprising means A and B' should not be limited to devices consisting only of components A and B. It means that with respect to the present invention, the only relevant components of the device are A and B.

Similarly, it is to be noticed that the term 'coupled', also used in the claims, should not be interpreted as being limitative to direct connections only. Thus, the scope of the expression 'a device A coupled to a device B' should not be limited to devices or systems wherein an output of device A is directly connected to an input of device B. It means that there exists a path between an output of A and an input of B which may be a path including other devices or means.

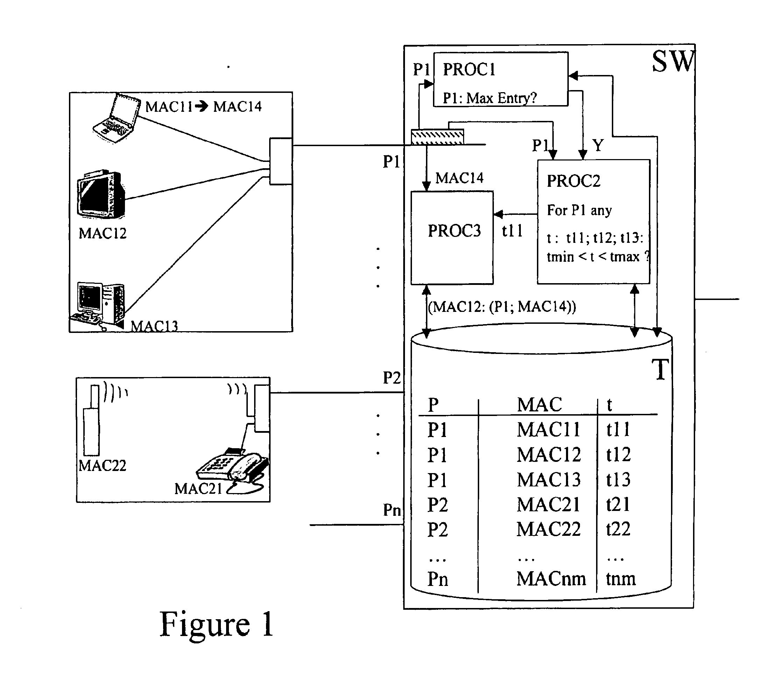

The above and other objects and features of the invention will become more apparent and the invention itself will be best understood by referring to the following description of an embodiment taken in conjunction with the accompanying drawings wherein the Figure represents an access network.

The Access network comprises a switching node SW that is coupled between the Internet network and a number of subscriber locations.

The SW comprises a number of ports P1, P2, .... Pn that provides access for a subscriber over e.g. a Digital Subscriber Line DSL line. A port reference is in this way a subscriber port reference.

At each subscriber location a number of network elements are included. The network elements can be implemented by e.g. a PC, fixed phone, mobile phone, .... Each one of the network elements includes a Network Interface Card NIC with its associated MAC address. In this way the Figure shows :
- a first home location being coupled via port P1 to the SW and comprising three network elements each having its MAC address MAC 11, MAC12 and MAC13; and
- a second home location being coupled via port P2 to the switch SW and comprising two network elements each having its MAC address MAC21 and MAC22,

The switching node SW comprises a dynamic Ethernet address-learning table T with for each entry an associated aging timer t. Presume that the address-learning table already comprises a number of entries. In this way the entry for the network element with MAC11 looks like:
(P1; MAC11 t11) with P1 the port being used for MAC11 to access, the switch and t11 the actual value of the timer being associated to this entry.

In a similar way the following entries are already made in the table:

| |
|---|
| (P1;MAC11; t11) |
| (P1; MAC1:2; t12): |
| (P1;MAC13;tl13) |
| (P2; MAC21:; t.21) |
| (P2; MAC22; t22) |
| ... ... ... |
| (Pn; MACnm; tnm). |

The switching device further comprises a first processor PROC1, a second processor PROC2 and a third processor PROC3.

The three processors PROC1, PROC2 and PROC3 are each coupled to a part e.g. Port P1 of the switch SW and to the address-learning table T. The first processor PROC1 is coupled to the second processor PROC2, which is coupled to the third processor PROC3.

The first processor PROC1 is included to determine whether the capacity condition being fulfilled i.e by checking whether a maximum number of Ethernet address entries in the learning table has been reached for the port P1 at which a newly packet is received.

It has to be explained that in this example MAC14 is the Ethernet MAC address of a newly installed network element at the first home location that replaces a previously instatted computer with previous MAC address MAC11.

The second processor PROC2 is included to determine upon reception of a new packet with a new Ethernet address i.e. MAC14 at a port P1 of the switch SW, a previous Ethernet address MACH that is associated in the learning table T by means of one of the previous entries to the port P1 and for which the associated aging timer t11 has been growing to a value between a predefined minimum aging time value tmin and a predefined maximum aging time value tmax.

The third processor PROC3 is included to provide an entry to the learning table T to overwrite in the learning table the previous Ethernet address MAC11 with the new Ethernet address MAC14. It has to be explained here that the expression overwritting can mean firstly deleting a previous entry and secondly entering the new entry.

Furthermore it has to be clear that with new Ethernet address MAC14 it is meant that indeed no entry in the address-learning table is yet present which comprises this Ethernet address MAC14.

The working of the device according to the present invention in accordance with its telecommunication environment that is shown in the Figure will be explained by means of a functional description of the different blocks shown therein. Based on this description, the practical implementation of the blocks will be obvious to a person skilled in the art and wilt therefor not be described in details. In addition, the principle working of the method to update a dynamic Ethernet address-learning table will be described in further detail.

The method for to be used by the switching node SW to update its dynamic Ethernet address-learning table (T) comprises the following steps. A first step is associating to each entry of the learning table an aging timer. This is shown in the figure by means of the above described entries and associated aging timers such as t11, t12, t13, t21, t22, ..., fnm. A following step is, checking whether the capacity condition is fulfilled. The first processor PROC1 executes this step. As described above, the capacity condition for this example embodiment is controlling whether a maximum number of Ethernet address entries for a particular subscriber line in the learning table has been reached. A newly packet with a new MAC14 address has been received at Port P1 i.e. the packet shown in the Figure at the port P1. This packet includes a new Ethernet address MAC14 from the newly installed network element. Presume that the home location e.g. DSL subscriber line of port P1 is allowed to have maximum three entries in the address-learning table T. According to the described example in the Figure, the result of the controlling step is positive. Hereby the first processor PROC1 triggers the second processor PROC2.

The second processor PROC2 receives the port reference P1 e.g. from the input P1 or from the first processor PROC1 and controls for each entry being associated to the receiving port P1 in the address-learning table T1 whether one of the associated aging timers t11, t12 or t13 reached a value between the predefined minimum aging time value tmin and the predefined maximum aging time value max. Presume that for this described embodiment, the aging timer t13 reached indeed a value between tmin and tmax. The second processor PROC2 provides to the third processor PROC3 this aging timer reference t11.

Upon reception of this aging timer t11, the third processor PROC3 prepares a newly entry for the address-learning table T. indeed, for the previous Ethernet address MAC11 that is associated in the learning table T by means of a previous entry P1; MAC11 to the receiving port P1 and for which the associated aging timer t11 reached indeed a value between the predefined minimum aging time value tmin and the predefined maximum aging time value tmax, the Ethernet address MAC11 of the entry is overwritten with the new Ethernet address MAC14 of the received Ethernet packet.

Hereby the system to update an address-learning table is made more flexible. Basically, the idea of the present application is about keeping the MAC address in the forwarding table under certain conditions, although it has been expired i.e, tmin has been reached by the aging timer or the entry, for security reasons and to ensure forwarding of traffic. However, in the event when the capacity condition of having reached a maximum number of Ethernet address entries for the port P1 in the learning table, is as well accomplished, a MAC entry can be replaced by another MAC entry of the same subscriber line. Hereby too long waiting times in the event of e.g. Nic replacements are avoided.

A final remark is that embodiments of the present invention are described above in terms of functional blocks. From the functional description of these blocks, given above, it will be apparent for a person skilled in the art of designing electronic devices how embodiments of these blocks can be manufactured with well-known electronic components. A detailed architecture of the contents of the functional blocks hence is not given.

While the principles of the invention have been described above in connection with specific apparatus, it is to be clearly understood that this description is made only by way of example and not as a limitation on the scope of the invention, as defined in the appended claims.

## Claims

1. A method for use by a switch (SW) to update a dynamic Ethernet address learning table (T), said method comprises
associating to each entry of said learning table an aging timer (t : t11, t12, t13, t21, t22, ..., tnm), wherein said method further comprises a step of in the event when a capacity condition being reached and
upon reception of a new packet with a new Ethernet address (MAC14) at a port (P1) of said switch (SW), overwriting in said learning table a previous Ethernet address (MAC11) with said new Ethernet address (MAC14), said previous Ethernet address (MAC11) being associated in said learning table (T) by a previous entry (P1; MAC11) to said port (P1) and for which said associated aging timer (t11) reached a value between a predefined minimum aging time (tmin) value and a predefined maximum aging time value (tmax) and that said capacity condition being accomplished by having reached a maximum number of Ethernet address entries for said port (P1) in said learning table.

2. The method according to claim 1, **characterized in that** said capacity condition being accomplished by having reached a maximum number of Ethernet address entries in said learning table.

3. The method according to claim 1, **characterized in that** said predefined maximum aging time value being a value equal than or larger than the DHCP lease time in the Network.

4. A switching device that comprises a dynamic Ethernet address-learning table (T) with for each entry an associated aging timer (t : t11, t12, t13, t21, t22, ..., tnm), wherein said switching device further comprises
- a first processor (PROC1) to determine whether a capacity condition being reached; and
- a second processor (PROC2) to determine, upon reception of a new packet with a new Ethernet address (MAC14) at a port (P1) of said switch (SW), a previous Ethernet address (MAC11) being associated in said learning table (T) by one of said previous entries to said port (P1) and for which said associated aging timer (t11) having a value between a predefined minimum aging time (tmin) value and a predefined maximum aging time value (tmax); and
- a third processor (PROC3) to provide an entry to said learning table (T) to overwrite in said learning table said previous Ethernet address (MAC11) with said new Ethernet address (MAC14) in the event when said capacity condition being fulfilled and said aging timer having a value between said predefined minimum aging time value (tmin) and said predefined maximum aging time value (tmax) and that said capacity condition being accomplished by having reached a maximum number of Ethernet address entries for said port (P1) in said learning table.

## Patentansprüche

1. Ein Verfahren zur Anwendung für die Aktualisierung einer dynamischen Ethernet-Adressenlerntafel (T) durch einen Switch (SW), wobei das besagte Verfahren umfasst:
- Zuordnen eines Alterungstimers (t: t11, t12, t13, t21, t.22, ..., tnm) zu jedem Eintrag der besagten Lerntafel, wobei das Verfahren weiterhin einen Schritt umfasst, um, wenn eine Kapazitätsbedingung erreicht wird, und
nach Empfang eines neuen Pakets mit einer neuen Ethernet-Adresse (MAC14) an einem Port (P1) des besagten Switch (SW), eine vorherigen Ethernet-Adresse (MAC11) in der besagten Lerntafel mit der besagten neuen Ethernet-Adresse (MAC14) zu überschreiben, wobei die besagte vorherige Ethernet-Adresse (MAC1) durch einen vorherigen Eintrag (P1; MAC11) mit dem besagten Port (P1) assoziiert ist und für welche der besagte zugeordnete Alterungstimer (t11) einen Wert zwischen einem vorgegebenen minimalen Wert der Alterungszeit (tmin) und einem vorgegebenen maximalen Wert der Alterungszeit (tmax) erreicht hat, und wobei die besagte Kapazitätsbedingung erfüllt ist, wenn eine maximale Anzahl von Ethernet-Adressen-Eingaben für den besagten Port (P1) in der besagten Lerntafel erreicht ist.

2. Das Verfahren nach Anspruch 1, **dadurch gekennzeichnet, dass** die besagte Kapazitätsbedingung erfüllt ist, wenn eine maximale Anzahl von Ethernet-Adressen-Eingaben in der besagten Lerntafel erreicht ist.

3. Das Verfahren nach Anspruch 1, **dadurch gekennzeichnet, dass** der besagte vorgegebene maximale Wert der Alterungszeit ein Wert ist, welcher gleich der oder größer als die DHCP-Lease-Zeit in dem Netzwerk ist.

4. Eine Vermittlungsvorrichtung, welche eine dynamische Ethernet-Adressenlerntafel (T) mit einem für jeden Eintrag assoziierten Alterungstimer (t: tl11, t12, t13, t21, t22, ..., tnm) umfasst, wobei die besagte Vermittlungsvorrichtung weiterhin umfasst:
- Einen ersten Prozessor (PROC1) zum Ermitteln, ob eine Kapazitätsbedingung erreicht ist; und
- einen zweiten Prozessor (PROC2) zum Ermitteln, nach Empfang eines neuen Pakets mit einer neuen Ethernet-Adresse (MAC14) an einem Port (P1) des besagten Switch (SW), einer vorherigen Ethernet-Adresse (MAC11), welche in der besagten Lerntafel (T) durch eine der besagten vorherigen Eingaben in den besagten Port (P1) assoziiert ist und für welche der besagte zugeordnete Alterungstimer (t11) einen Wert zwischen einem vorgegebenen minimalen Wert der Alterungszeit (tmin) und einem vorgegebenen maximalen Wert der Alterungszeit (tmax) hat; und
- einen dritten Prozessor (PROC3) zum Bereitstellen einer Eingabe in die besagte Lerntafel (T) zum Überschreiben der besagten vorherigen Ethernet-Adresse (MAC1 1) mit der besagten neuen Ethernet-Adresse (MAC 14) in der besagten Lerntafel, wenn die besagte Kapazitätsbedingung erfüllt ist und der besagte Alterungstimer einen Wert zwischen dem besagten vorgegebenen minimalen Wert der Alterungszeit (tmin) und dem besagten vorgegebenen maximalen Wert der Alterungszeit (tmax) hat, und wobei die besagte Kapazitätsbedingung durch das Erreichen einer maximalen Anzahl von Ethernet-Adressen-Eingaben für den besagten Port (P1) in der besagten Lerntafel erfüllt ist.

## Revendications

1. Procédé à utiliser par un commutateur (SW) pour mettre à jour une table d'apprentissage d'adresses Ethernet dynamique (T), ledit procédé comprenant les étapes suivantes :
- associer à chaque entrée de ladite table d'apprentissage un temporisateur chronologique (t: t11, t12, t13, t21, t22, ... tnm), dans lequel ledit procédé comprend en outre une étape dans le cas où une condition de capacité est atteinte et
sur réception d'un nouveau paquet avec une nouvelle adresse Ethernet (MAC14) au niveau d'un port (PT) dudit commutateur (SW), remplacement dans ladite table d'apprentissage d'une précédente adresse Ethernet (MAC11) par ladite nouvelle adresse Ethernet (MAC14), ladite précédente adresse Ethernet (MAC11) étant associée dans ladite table d'apprentissage (T) par une entrée précédente (P1; MAC11) audit port (P1) et pour laquelle ledit temporisateur chronologique associé (t11) a atteint une valeur entre une valeur de temporisation chronologique minimum prédéfinie (tmin) et une valeur de temporisation chronologique maximum prédéfinie (tmax) et en ce que ladite condition de capacité est accomplie en ayant atteint un nombre maximum d'entrées d'adresse Ethernet pour ledit port (P1) dans ladite table d'apprentissage.

2. Procédé selon la revendication 1, **caractérisé en ce que** ladite condition de capacité est accomplie en ayant atteint un nombre maximum d'entrées d'adresse Ethernet dans ladite table d'apprentissage.

3. Procédé selon la revendication 1, **caractérisé en ce que** ladite valeur de temporisation chronologique maximum prédéfinie est une valeur supérieure ou égale à la durée du bail DHCP dans le réseau.

4. Dispositif de commutation comprenant une table d'apprentissage d'adresses Ethernet dynamique (T) avec pour chaque entrée un temporisateur chronologique associé (t : t11, t12, t13, t21, t22, ..., tnm), dans lequel ledit dispositif de commutation comprend en outre :
- un premier processeur (PROC 1) pour déterminer si une condition de capacité est atteinte ; et
- un deuxième processeur (PROC2) pour déterminer, sur réception d'un nouveau paquet possédant une nouvelle adresse Ethernet (MAC14) au niveau d'un port (P1) dudit commutateur (SW), une précédente adresse Ethernet (MAC11) étant associée audit port (P1) dans ladite table d'apprentissage (T) par l'une desdites entrées précédentes et pour laquelle ledit temporisateur chronologique associé (t11) a une valeur comprise entre une valeur de temporisation chronologique minimum prédéfinie (tmin) et une valeur de temporisation chronologique maximum prédéfinie (tmax) ; et
- un troisième processeur (PROC3) pour fournir une entrée à ladite table d'apprentissage (T) pour remplacer dans ladite table d'apprentissage ladite précédente adresse Ethernet (MAC1 1) par ladite nouvelle adresse Ethernet (MAC 14) au cas où ladite condition de capacité soit remplie et ledit temporisateur chronologique ayant une valeur comprise entre ladite valeur de temporisation chronologique minimum prédéfinie (tmin) et ladite valeur de temporisation chronologique maximum prédéfinie (tmax) et ladite condition de capacité étant accomplie en ayant atteint un nombre maximum d'entrées d'adresse Ethernet pour ledit port (Pl) dans ladite table d'apprentissage.
